# EUROPEAN PATENT APPLICATION

(11) **EP 1 806 731 A2**
(43) Date of publication of application: **11.07.2007**
(21) Application number: 06077337.1
(22) Date of filing: 29.12.2006
(51) Int. Cl.: G09G 5/00

(54) **Display apparatus and control method thereof**

(30) Priority: 09.01.2006 KR 20060002435
(71) Applicant: Samsung Electronics Co., Ltd., Suwon-si, Gyeonggi-Do (KR)
(72) Inventor: Kim, Hak-jae, Dongsuwon LG Village, Suwon-si Gyeonggi-do (KR)
(74) Representative: Hylarides, Paul Jacques

(57) **Abstract**

A display apparatus having a display part on which an image is displayed, and includes a controller to determine whether a video signal includes an authentication signal and to select a processing format of the video signal input from an external video device based on the determination result, and a signal processor to process the video signal corresponding to the processing format selected by the controller.

## Description

### CROSS-REFERENCE TO RELATED APPLICATIONS

This application claims the benefit of Korean Patent Application No.2006-0002435, filed on January 9, 2006, in the Korean Intellectual Property Office, the disclosure of which is incorporated herein by reference in its entirety.

### BACKGROUND OF THE INVENTION

### Field of the Invention

The present general inventive concept relates to a display apparatus and a control method thereof, and more particularly, to a display apparatus and a control method thereof which differentially processes a video signal according to the type of an external video device.

### Description of the Related Art

Generally, a display apparatus receives a video signal from an external video signal source and displays the received video signal on a display part.

Recently, various kinds of external video signal sources connected with a single display apparatus have been developed. Also, the type of the video signal supplied to the display apparatus varies according to the type of the external video signal source.

For example, when the external video signal source comprises a PC, a still image is usually supplied to the display apparatus. When the external video signal source comprises a DVD player, a moving picture is usually supplied to the display apparatus. Accordingly, the display apparatus needs to process the video signal for both the moving picture and the still image.

In the case of the DVD player, since the video signal is output to the display apparatus with a higher picture quality than the PC, the display apparatus needs to process the video signal differentially according to the video signal source. The video signal supplied from the DVD player is mainly a movie that is displayed on a part of or on the whole display part. Meanwhile, the video signal supplied from the PC is processed to be displayed as the whole display picture including an area containing a start button and a task bar.

Therefore, there is an increasing need for the display apparatus to process the supplied video signal according to the type of the external video signal source.

Under such circumstances, conventional display apparatuses may not determine the type of the external video signal source when a plurality of external video signals are input through the same connection part, such as a DVI connector. If possible, the conventional display apparatuses determine the type of the external video signal source according to detected formats of horizontal/vertical synchronous signals of the video signal supplied from the external video signal source. Recently, however, the formats of the horizontal/vertical synchronous signals of the video signal supplied from the external video signal source have been mixed in use regardless of the type of the external video signal source. Therefore, the conventional display apparatuses have a problem in that the type of the external video signal source can not be precisely determined to process the video signal properly with only the detected format of the horizontal/vertical synchronous signals of the input video signal.

### SUMMARY OF THE INVENTION

The present general inventive concept provides a display apparatus and a control method thereof which precisely determines the type of an external video device and properly processes a video signal from the determined external video device for higher picture quality.

Additional aspects and advantages of the present general inventive concept will be set forth in part in the description which follows and, in part, will be obvious from the description, or may be learned by practice of the general inventive concept.

The foregoing and/or other aspects and utilities of the present general inventive concept are achieved by providing a display apparatus comprising a display part on which an image is displayed, comprising: a controller to determine whether a video signal includes an authentication signal and to select a processing format of the video signal input from an external video device based on the determination result; and a signal processor to process the video signal corresponding to the processing format selected by the controller.

The controller can comprise an authentication determiner to determine whether a video signal supplied through a connector comprises an authentication signal

The controller can comprise a memory to store a plurality of video variables corresponding to the processing format, and controls the signal processor to process the video signal according to the plurality of video variables; and wherein the plurality of video variables correspond with a computer signal and an authentication video signal, respectively.

The controller can control the signal processor to process the video signal as the authentication video signal when the authentication determiner determines that the authentication signal is received.

The controller can detect a timing signal of the video signal and selects the processing format of the video signal according to the detection result.

The memory can store information on the timing signal corresponding to the processing format, and wherein the controller can compare the timing signal of the detected video signal with the information stored in the memory and determines the processing format of the video signal.

The controller can detect the timing signal of the video signal and can determine the processing format of the video signal when the authentication signal is not received.

The memory can store information on the timing signal corresponding to the computer signal and the authentication video signal, respectively.

The timing signal can comprise at least one of a horizontal synchronous signal, a vertical synchronous signal and a pixel clock signal of the video signal.

The controller can detect a data signal of the video signal and determines an output format of the video signal based on the detected data signal.

The controller can detect a data signal of the video signal and can determine whether to process the video signal corresponding to the computer signal or the authentication video signal when the detected timing signal of the video signal is included in both the information on the timing signal corresponding to the computer signal and the information on the timing signal corresponding to the authentication video signal, which are stored in the memory.

The controller can detect the data signal of the video signal and can determine whether to process the video signal corresponding to the computer signal or the authentication video signal when the information on the detected timing signal of the video signal is not stored in the memory.

The authentication determiner can comprise a plurality of authentication IDs, and wherein the authentication signal can comprise a signal having an instruction to output the authentication IDs to the external video device according to a high-bandwidth digital contents protection (HDCP) method.

The authentication determiner can comprise at least one of a digital video interface (DVI) and a high definition multimedia interface(HDMI).

The foregoing and/or other aspects and utilities of the present general inventive concept are achieved by providing a method of controlling a display apparatus, the method comprising: determining whether an authentication signal is received from an external video device; selecting a processing format of a video signal supplied from the external video device according to whether the authentication signal is received; and processing the video signal according to the selected processing format.

The determining the processing format of the video signal can comprise determining the video signal as the computer signal when the authentication signal is not received.

The determining the processing format of the video signal can comprise determining the video signal as the authentication video signal when the authentication signal is received.

The method may further comprise detecting a timing signal of the video signal, and wherein the determining the processing format of the video signal can comprise determining the processing format of the video signal according to the detection result of the timing signal.

The method may further comprise detecting a data signal of the video signal, and wherein the determining the processing format of the video signal can comprise determining the processing format of the video signal according to the detection result of the data signal.

The method may further comprise providing a plurality of authentication IDs, and wherein the determining whether the authentication signal is received can comprise determining whether the authentication signal comprises a signal having an instruction to output the authentication IDs to the external video device according to a high-bandwidth digital contents protection (HDCP) method.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a control block diagram of a display apparatus according to an embodiment of the present general inventive concept; and
FIG. 2 is a control flowchart illustrating an operation of the display apparatus according of Fig. 1, according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

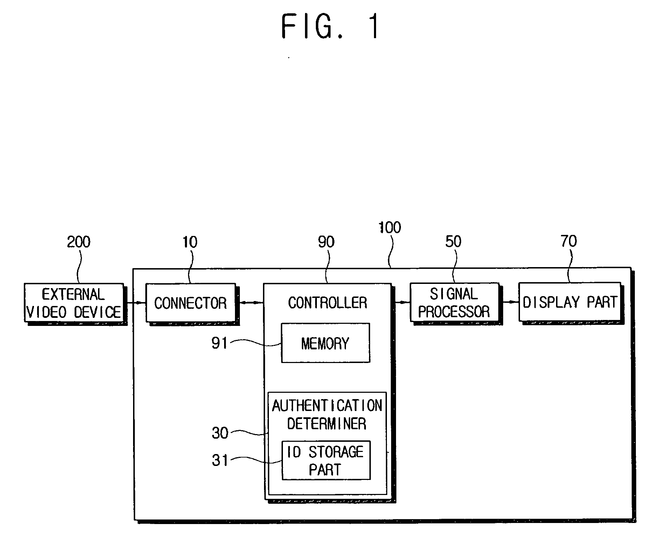

As illustrated in FIG. 1, a display apparatus 100 according to an embodiment of the present general inventive concept comprises a connector 10 which is connected with an external video device 200, an authentication determiner 30, a signal processor 50, a display part 70, and a controller 90 which controls these components.

The connector 10 includes connection terminals through which the connector connects with external video devices 200. Specifically, the connector 10 may include terminals corresponding to various video signal formats to receive various video signals from external video devices 200.

For example, the connector 10 may include at least one of a DVI (digital video interface) input terminal (not illustrated) to receive a DVI signal, an HDMI (high definition multimedia interface) input terminal (not illustrated) to receive a HDMI signal, a composite input terminal (not illustrated) to receive a composite signal, an S-video input terminal (not illustrated) to receive an S-video signal, a component input terminal (not illustrated) to receive a component signal, and a PC input terminal (not illustrated) to receive a PC signal.

The authentication determiner 30 determines whether an authentication signal is supplied from the external video device 200 through the connector 10. In this embodiment, the authentication determiner 30 may include an ID storage part 31 which has authentication ID information, or the ID storage part 31 may output the authentication ID information stored therein to the external video device 200 according to the authentication signal. Thus, the external video device 200 may output the video signal to the display apparatus 100 after performing an authentication process based on the authentication ID information.

As an alternative embodiment, the authentication signal may include a plurality of authentication key information for an authentication process, and the authentication determiner 30 may proceed with the authentication process.

In this embodiment, if the display apparatus 100 supports high-bandwidth digital contents protection (HDCP), the authentication determiner 30 may determine whether the authentication signal according to the HDCP is received from the external video device 200.

Specifically, if the external video device 200 supports the HDCP also, the external video device 200 can read a pseudo random value (An) and an AKSV (key select vector of a host device, i.e., the external video device 200) and transmit them to the display apparatus 100. Upon receiving the An and the AKSV, the display apparatus 100 reads an authentication ID stored in the ID storage part 31, i.e., a key select vector of the display apparatus 100, and transmits the read authentication ID to the external video device 200.

Here, the authentication signal may comprise a signal which has the An and the AKSV. Thus, upon receiving a signal having the An and the AKSV, the authentication determiner 30 determines that an authentication signal is received, and then informs the controller 90 that the authentication signal is received. Then, the controller 90 of the display apparatus 100 controls the signal processor 50 to process the video signal received from the external video device 200 as an authenticated video signal.

In the meantime, upon receiving a BKSV (key select vector of the display apparatus), the external video device 200 selects a plurality of AKSVs corresponding to the received BKSV, among the stored plurality of AKSVs, and calculates a shared secret value (Km) of the selected AKSVs. For example, the external video device 200 may sum the selected AKSVs to calculate Km (the shared secret value of the selected AKSVs). The external video device 200 calculates a session key (Ks), a secret value (Mo) and a response value (Ro) by using An and Km as a factor of a high-bandwidth digital contents protection (HDCP) cipher function. With the same method, "Ro'" calculated by the display apparatus 100 may be supplied to the external video device 200.

Then, the external video device 200 may determine whether the HDCP authentication is successful by using "Ro" calculated by the external video device 200 and "Ro'" calculate and responded by the display apparatus 100. For example, if "Ro" and "Ro'" are identical with each other, the external video device 200 may determine that the HDCP authentication is successful. When the authentication is determined to be successful, the external video device 200 may output the video signal to the display apparatus 100.

In this embodiment, the authentication determiner 30 may include various interfaces such as a DVI interface, an HDMI interface and the like, as long as it can determine whether the authentication signal is received.

The signal processor 50 processes the video signal received from the connector 10 to be displayed on the display part 70. If a plurality of connectors 10 are provided in the display apparatus 100, the signal processor 50 may process the video signal which is input through a connector 10 selected among the plurality of connectors 10, to be displayed on the display part 70.

In this embodiment, the signal processor 50 may include a scaler (not illustrated) to scale the video signal, an A/D converter (not illustrated) to convert an input analog signal into a digital signal, etc. Using these components, the signal processor 50 may process the video signal input from the external video device 200 to be displayed on the display part 70 in more various ways.

Also, the signal processor 50 may differentially process the video signal according to the type of the external video device 200 under a control of the controller 90 (to be described later).

The display part 70 receives the video signal from the signal processor 50 and displays an image. The display part 70 can include a display module (not illustrated) on which the image is displayed, and a module driver (not illustrated) which processes an input video signal and displays the image on the display module.

In this embodiment, the display module may include various types of display modules, such as a cathode ray tube (CRT), a digital light processing (DLP), a liquid crystal display (LCD) and a plasma display panel (PDP). If the display module is the DLP, the module driver includes an optical engine. If the display module is the LCD, the module driver includes a printed circuit board (PCB) which converts the video signal input from the signal processor 50 into a data signal and a gate signal. In this manner, the display part 70 may have different module drivers depending on the type of the display module.

The controller 90 analyses the video signal supplied from the external video device 200 and determines a processing format of the video signal. Then, the controller 90 controls the signal processor 50 to process the video signal according to the determined processing format.

Hereinafter, it will be illustrated in this embodiment that the processing formats include a processing format corresponding to a PC signal and a processing format corresponding to an authentication video signal. Here, the PC signal comprises a signal supplied from a PC. An external video signal comprises a signal supplied from a video source, such as, for example, a DVD player, but not the PC.

The controller 90 analyzes the video signal from the external video device 200, determines the processing format of the video signal corresponding to the PC signal or the authentication video signal, and controls the signal processor 50 to process the video signal according to the determined processing format.

In this embodiment, the controller 90 may control the signal processor 50 to process the video signal as the authentication video signal when the authentication signal is received based on the determination result of the authentication determiner 30. As described above, when the display apparatus 100 supports the HDCP, the authentication signal comprises a signal having an An and an AKSV. However, the authentication signal may be any signal if only it may be used for the authentication process.

When the authentication signal is not received, the controller 90 may process the video signal from the external video device 200 as the PC signal. In this case, the controller 90 may detect at least one of a timing signal and a data signal of the video signal to determine the output format of the video signal.

In an embodiment, the controller 90 may include a memory 91 to store video variables corresponding to respective processing formats. That is, the memory 91 may store a video variable corresponding to the PC signal and a video variable corresponding to the authentication video signal. Thus, the controller 90 can control the signal processor 50 to process the video signal according to the video variables stored in the memory 91. Here, the respective video variables may include various factors such as picture quality, image size and the like.

Here, the controller 90 may determine that the video signal to be processed as the PC signal is a video signal received from a PC, and store a video variable that is suitable to process the video signal received from the PC in the memory 91. Also, the controller 90 may determine that the video signal to be processed as the authentication signal is a video signal received from a video device such a DVD or a HDMI, and store a video variable that is suitable to process the video signal in the memory 91.

As there is a high possibility that an image corresponding to the PC signal comprises a still image, the controller 90 may control the signal processor 50 to process the image corresponding to the PC signal to be compatible with the still image, and to process an image corresponding to the authentication video signal to be compatible with a moving picture. The controller 90 may control the signal processor 50 to process the PC signal to be displayed with an overall display picture since the PC signal includes information on a task bar, and to process the authentication video signal with high image quality.

Meanwhile, the controller 90 may detect the timing signal of the video signal and determine an output format of the video signal according to a detection result. That is, the controller 90 may control the signal processor 50 to process the video signal supplied from an external source corresponding to one of the PC signal and the authentication video signal, according to the detected timing signal. Here, the timing signal comprises at least one of timing signals of a pixel clock signal and horizontal/vertical synchronous signals.

The memory 91 may further store information on the timing signal corresponding to the PC signal and information on the timing signal corresponding to the authentication video signal. Accordingly, the controller 90 may compare the timing signal of the detected video signal with the information stored in the memory 91 to determine the video signal. That is, the controller 90 may determine whether the video signal corresponds to the PC signal or the authentication video signal.

For example, the memory 91 may store a timing signal of "1024X768/60Hz" corresponding to the PC signal. Here, the timing signal of the vertical synchronous signal has a frequency of 60Hz, the timing signal of the horizontal synchronous signal has a frequency of 60X768Hz, and the timing signal of the pixel clock signal has a frequency of "60X768X1024Hz." Also, the memory 91 may store a timing signal of "1280X768/60Hz" corresponding to the authentication video signal. In this case, the timing signal of the vertical synchronous signal has a frequency of 60Hz, the timing signal of the horizontal synchronous signal has a frequency of 60X768Hz, and the timing signal of the pixel clock signal has a frequency of 60X768X1024Hz.

Upon receiving a video signal corresponding to the frequency of "1280X768/60Hz," the controller 90 may process the video signal as the authentication video signal. Upon receiving a video signal corresponding to the frequency of "1024X768/60Hz," the controller 90 may process the video signal as the PC signal.

As described above, the controller 90 first determines whether the authentication signal is received, and then detects the timing signal of the video signal if it is determined that the authentication signal is not received. The controller 90 may determine whether to process the video signal as the PC signal or as the authentication video signal, based on the detection result.

Meanwhile, the controller 90 may detect a data signal of the video signal and determine whether to process the video signal corresponding to the PC signal or the authentication video signal based on the detected data signal. Here, the memory 91 stores information corresponding to the data size of the PC signal and information corresponding to the data size of the authentication video signal.

Then, the controller 90 compares the data size of the detected data signal with the data size stored in the memory 91 to determine whether to process the input video signal as the PC signal or as the authentication video signal.

Here, after detecting the timing signal of the video signal, the controller 90 may detect the data signal of the video signal when it does not determine whether the video signal corresponds to the PC signal or the authentication video signal based on the comparison of the detection result with the information on the timing signal stored in the memory 91.

When the timing signal of the video signal does not correspond to either the timing signal corresponding to the PC signal stored in the memory 91 or the timing signal corresponding to the authentication video signal, the controller 90 may not determine whether the video signal corresponds to the PC signal or the authentication video signal. When the information stored as the PC signal and the information stored as the authentication video signal in the memory 91 comprise the same timing signal, the controller 90 may not determine whether the video signal corresponds to the PC signal or the authentication video signal.

For example, when both the information stored as the PC signal and the information as the authentication video signal in the memory 91 have a frequency of "1024X768/60Hz," the received video signal may correspond to "the frequency of 1024X768/60Hz." Then, the controller 90 may not determine whether the video signal corresponds to the PC signal or the authentication video signal. Thus, the controller 90 may detect the data signal of the video signal input through the connector 10 to determine whether the input video signal corresponds to the PC signal or the authentication video signal.

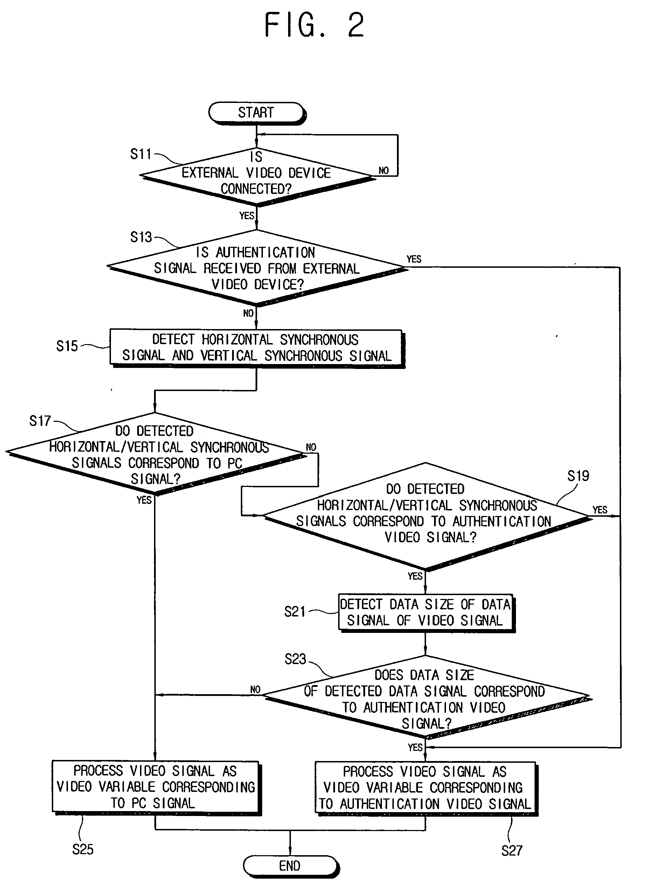

Hereinafter, a control method of the display apparatus of FIG. 1 will be described with reference to FIG. 2.

As illustrated in FIG. 2 and referenced to FIG. 1, the display apparatus 100 is connected with the external video device 200 through the connector 10 at operation S11 to receive a video signal from the external video device 200. Then, the authentication determiner 30 of the display apparatus 100 determines whether an authentication signal is received from the external video device 200 at operation S13. Since the authentication signal has been described above with reference to FIG. 1, a detailed explanation thereof will be omitted here.

If it is determined at the operation S13 that the authentication signal is received, the controller 90 controls the signal processor 50 to process the video signal as a video variable corresponding to the authentication video signal at operation S27. If it is determined at the operation S13 that the authentication signal is not received, the controller 90 may detect a timing signal of the video signal at operation S15. Here, the timing signal comprises at least one of a pixel clock signal, a horizontal synchronous signal and a vertical synchronous signal.

The controller 90 determines whether the detected timing signal corresponds to a PC signal or the authentication video signal at operations S17 and S19. It is preferable, but not necessary, that the memory 91 stores information on the timing signal corresponding to the PC signal and information on the timing signal corresponding to the authentication video signal.

If it is determined at the operation S17 that the detected timing signal corresponds to the PC signal, the controller 90 controls the signal processor 50 to process the video signal as the video variable corresponding to the PC signal at operation S25. If it is determined at the operation S19 that the detected timing signal corresponds to the authentication video signal, the controller 90 controls the signal processor 50 to process the video signal as the video variable corresponding to the authentication video signal at operation S27.

Meanwhile, the controller 90 may not determine whether the video signal corresponds to the PC signal or the authentication video signal, even after detecting the timing signal of the video signal and comparing the detected timing signal with the information stored in the memory 91. As described above, such a case may arise when the information corresponding to the timing signal of the input video signal is not stored in the memory 91 or when the timing signal of the input video signal is stored in the memory 91 to correspond to both of the PC signal and the authentication video signal.

Then, the controller 90 detects the data size of a data signal of the video signal at operation S21. Next, the controller 90 determines whether the data size of the detected data signal corresponds to the PC signal or the authentication video signal at operation S23. Here, it is preferable, but not necessary, that the memory 91 of the controller 90 stores the information on the data size of the data signal corresponding to the PC signal and the data size of the data signal corresponding to the authentication video signal. In this case, the controller 90 may compare the data size of the data signal of the video signal supplied from the external video device 200 with the information stored in the memory 91 to determine whether the input video signal corresponds to the PC signal or the authentication video signal.

If the data size of the data signal of the video signal corresponds to the authentication video signal, the controller 90 controls the signal processor 50 to process the video signal as the video variable corresponding to the authentication video signal, according to the data size of the data signal of the video signal at the operation S27. If the data size of the data signal of the video signal corresponds to the PC signal, the controller 90 may control the signal processor 50 to process the video signal as the video variable corresponding to the PC signal, according to the data size of the data signal of the video signal at the operation S25.

While it has been illustrated In the foregoing embodiments that the display apparatus 100 determines whether an authentication signal is received from the external video device 200 and then detects a timing signal, the operations of determining the reception of the authentication signal to distinguish between video signals, detecting the timing signal to distinguish between video signals, and detecting the data signal to distinguish between video signals may be modified and changed by an intention of a manufacturer of the display apparatus 100 according to the present general inventive concept.

As apparent from the above description, the present general inventive concept provides a display apparatus and a control method thereof, which precisely determines the type of an external video device and properly processes a video signal from the external video device for better image quality.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A display apparatus comprising a display part on which an image is displayed, comprising:
a controller to determine whether a video signal includes an authentication signal and to select a processing format of the video signal input from an external video device based on the determination result; and
a signal processor to process the video signal corresponding to the processing format selected by the controller.

2. The display apparatus according to claim 1, wherein the controller comprises an authentication determiner to determine whether a video signal supplied through a connector comprises an authentication signal.

3. The display apparatus according to claim 1 or 2, wherein the controller comprises a memory to store a plurality of video variables corresponding to the processing format, and controls the signal processor to process the video signal according to the plurality of video variables; and
wherein the plurality of video variables correspond with a computer signal and an authentication video signal, respectively.

4. The display apparatus according to claim 3, wherein the controller controls the signal processor to process the video signal as the authentication video signal when the authentication determiner determines that the authentication signal is received.

5. The display apparatus according to claim 3 or 4, wherein the controller detects a timing signal of the video signal and selects the processing format of the video signal according to the detection result.

6. The display apparatus according to claim 5, wherein the memory stores information on the timing signal corresponding to the processing format, and
wherein the controller compares the timing signal of the detected video signal with the information stored in the memory and determines the processing format of the video signal.

7. The display apparatus according to claim 6, wherein the controller detects the timing signal of the video signal and determines the processing format of the video signal when the authentication signal is not received.

8. The display apparatus according to any of the claims 5-7, wherein the memory stores information on the timing signal corresponding to the computer signal and the authentication video signal, respectively.

9. The display apparatus according to any of the claims 5-8, wherein the timing signal comprises at least one of a horizontal synchronous signal, a vertical synchronous signal and a pixel clock signal of the video signal.

10. The display apparatus according to any of the claims 3-9, wherein the controller detects a data signal of the video signal and determines an output format of the video signal based on the detected data signal.

11. The display apparatus according to any of the claims 6-8, wherein the controller detects a data signal of the video signal and determines whether to process the video signal corresponding to the computer signal or the authentication video signal when the detected timing signal of the video signal is included in both the information on the timing signal corresponding to the computer signal and the information on the timing signal corresponding to the authentication video signal, which are stored in the memory.

12. The display apparatus according to any of the claims 6-8, wherein the controller detects the data signal of the video signal and determines whether to process the video signal corresponding to the computer signal or the authentication video signal when the information on the detected timing signal of the video signal is not stored in the memory.

13. The display apparatus according to any of the claims 1-12, wherein the authentication determiner comprises a plurality of authentication IDs, and
wherein the authentication signal comprises a signal having an instruction to output the authentication IDs to the external video device according to a high-bandwidth digital contents protection (HDCP) method.

14. The display apparatus according to claim 13, wherein the authentication determiner comprises at least one of a digital video interface (DVI) and a high definition multimedia interface (HDMI).

15. A method of controlling a display apparatus, the method comprising:
determining whether an authentication signal is received from an external video device;
selecting a processing format of a video signal supplied from the external video device according to whether the authentication signal is received; and
processing the video signal according to the selected processing format.

16. The method according to claim 15, wherein the determining the processing format of the video signal comprises:
determining the video signal as the computer signal when the authentication signal is not received.

17. The method according to any of the claims 15 or 16, wherein the determining the processing format of the video signal comprises:
determining the video signal as the authentication video signal when the authentication signal is received.

18. The method according to any of the claims 15-17, further comprising:
detecting a timing signal of the video signal, and
wherein the determining the processing format of the video signal comprises determining the processing format of the video signal according to the detection result of the timing signal.

19. The method according to claim 18, further comprising:
detecting a data signal of the video signal, and
wherein the determining the processing format of the video signal comprises determining the processing format of the video signal according to the detection result of the data signal.

20. The method according to any of the claims 15-19, further comprising:
providing a plurality of authentication IDs, and
wherein the determining whether the authentication signal is received comprises determining whether the authentication signal comprises a signal having an instruction to output the authentication IDs to the external video device according to a high-bandwidth digital contents protection (HDCP) method.
